Europäisches Patentamt

European Patent Office

Office européen des brevets

(11) Publication number: **0 446 186 A1**

# EUROPEAN PATENT APPLICATION

(21) Application number: 91830072.4

(22) Date of filing: 05.03.91

(51) Int. Cl.5: **B62D 55/30**

(30) Priority: 09.03.90 IT 6716690

(43) Date of publication of application:
**11.09.91 Bulletin 91/37**

(84) Designated Contracting States:
**AT CH DE ES FR GB IT LI**

(71) Applicant: **SAME S.p.A.**
**Viale F. Cassani, 14**
**I-24047 Treviglio Bergamo(IT)**

(72) Inventor: **Biondi, Angelo**
**Via Pioppe 7**
**I-40066 Pieve di Cento (Bologna)(IT)**

(74) Representative: **Buzzi, Franco et al**
**c/o Jacobacci-Casetta & Perani S.p.A. Via**
**Alfieri, 17**
**I-10121 Torino(IT)**

(54) A system for tensioning the tracks of tracked agricultural tractors.

(57) A system for tensioning the tracks (1, 2) of a tracked agricultural tractor comprising, for each track, a hydraulic jack (10) whose thrust chamber (11) is connected into a hydraulic control circuit (12) including a pressurised hydraulic-fluid source (13) and a regulator and shut-off valve unit (16).

FIG. 1

EP 0 446 186 A1

The present invention relates in general to tracked vehicles, and particularly to tracked agricultural tractors.

In these vehicles, each track comprises an endless chain belt which passes round a drive wheel and a track-tensioning wheel which is movable longitudinally and is acted upon by thrust means which urge it away from the drive wheel to keep the track tensioned.

In use. it is of fundamental importance to keep the track tension as constant as possible: in fact the integrity, effectiveness and operative life of the tracks, which are notoriously delicate and expensive, depend thereon.

There are essentially two types of conventional systems in current use for tensioning the tracks: the first uses grease under pressure with a manually operated pump and the second a screw-and-thread arrangement. Both systems require the correct tension to be reset periodically, and involve difficulties of adjustment of the tensioning to the nature of the ground and the state of the tracks, all of which must be carried out manually with the use in the first case, of a grease gun and, in the second case, of suitable adjustment spanners.

These operations require time, the availability of the necessary tools and a suitable environment, and also necessitate the preliminary cleaning of the parts involved in the adjustment.

For these reasons, these operations are often put off or even avoided which results in the following problems:

- if the tracks are too slack, there is a danger of the chain jumping: which is extremely detrimental to the operative life of the system;
- if the tracks are too tight this gives rise to excessive overloading with a consequent risk of breakage and wear within a short time, as well as a loss of power.

Also known in the art, for instance from EP-A-O 277 774, DE-A-3 237 336, FR-A-2 145 778 and EP-A-332 869 are remote-control hydraulic tensioning systems for use on tracked vehicles for military purposes such as tanks, or on each-moving tracked machines.

In the systems disclosed in EP-A-O 277 774 and DE-A-3 237 336 the said thrust means comprise, for each track, a hydraulic jack connected into a hydraulic control circuit which includes a source of pressurised hydraulic fluid and a regulator valve unit for controlling the communication between the source and the two hydraulic jacks.

In the case of DE-A-3 237 336 the hydraulic jacks are single-acting rams, and the control circuit is operatively connected with a selector switch operated by the gear or range selector. So as to make the pressure of the hydraulic rams dependent upon the travel mode the lower gears have different tension limits than the higher gears, for faster travels. This system, such as the others known from the above-mentioned documents, is extremely sophisticated and complex and thus unsuitable for the low cost requirements in the field of agricultural tractors, for which it is on the contrary desirable providing a track-tensioning system with flexible regulation features, also adapted to be selectively changeable as a function of the working characteristics which are peculiar to such agricultural tractors.

The object of the present invention is to avoid the aforesaid problems and to provide a tensioning system whose operation can either be automatic or effected instantaneously and directly by the driver from the driving position, even with the machine in motion, as well as individually for each belt independently of the other.

According to the invention, this object is achieved by means of a tensioning system of the type defined in the preamble of claim 1, characterised by the features set forth in the characterising part of such claim 1.

Further secondary features of the invention are recited in subclaims 2-6.

The advantages of the tensioning system according to the invention may be summarised as follows:

- correct progressiveness of application of the tensioning load which is therefore always within the permitted limits, avoiding human overloading errors;
- instantaneous adjustment to the varying nature of the ground: the system supplies the tensioning system in the event of slackness and discharges it in the event of over-tensioning;
- safety: in the event of an imperfect seal or leakage through the valves, the tensioning load is rebalanced to normal values;
- cleanness and economy since the closed circuit enables the fluid used to be recycled;
- easy and convenient adjustment of the tensioning;
- possibility of excluding the system and rapidly applying a conventional tensioning system by means of manual injection of grease into the thrust chambers of the jacks, in case of failure of the control circuit.

The invention will now be described in detail with reference to the appended drawings, provided purely by way of non-limiting example, in which:

Figure 1 is a schematic plan view of a system according to the invention for tensioning the tracks of an agricultural tractor,

Figure 2 is a longitudinal section taken on the line II-II of Figure 1, on an enlarged scale, and

Figures 3 and 4 are hydraulic diagrams of the details indicated by the arrows III and IV respectively in Figure 1.

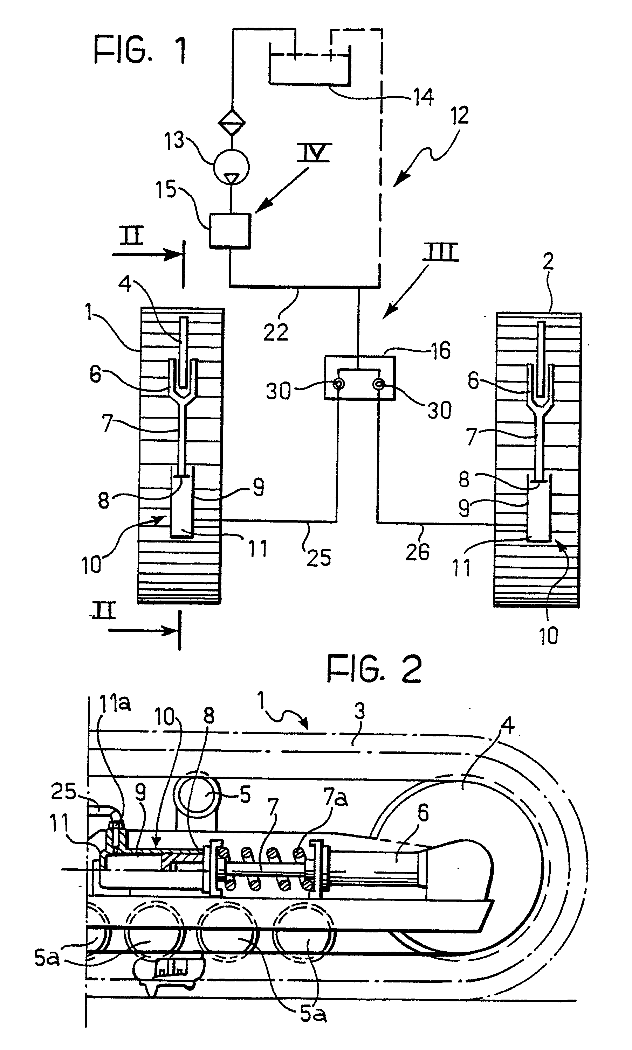

With reference initially to Figures 1 and 2, the tracks of an agricultural tractor are indicated 1 and 2 and each comprises, in known manner, a chain belt 3 with treads with gripping ribs (not shown), which passes in an endless loop around a motor-driven drive wheel (not shown) and a track-tensioning wheel 4. A support roller 5 is associated with the upper pass of the chain belt 3 whilst its lower pass bears against load-bearing rollers 5a.

The track-tensioning wheel 4 is movable longitudinally relative to the driving wheel, that is, relative to the structure of the tractor: for this purpose, it is supported for rotation by a fork 6 carried by a horizontal rod 7. The opposite end of the rod 7 from the track-tensioning wheel 4 is connected to a piston 8 which is sealingly slidable in the cylinder 9 of a single-acting hydraulic jack 10 fixed to the structure of the tractor. At least one helical compression spring 7a is coaxially placed on the stem 7, which spring is pre-loaded under a middle-high load and has the function of shock-absorbing, beyond a predetermined load level.

The thrust chambers 11 of the two hydraulic jacks 10 associated with the two tracks 1, 2 are connected into a hydraulic control circuit, generally indicated 12 in Figure 1. This circuit 12 includes a hydraulic pump 13 (normally the same pump as that used for the hydraulic power lift 20 of the tractor) which draws hydraulic fluid from a reservoir 14 and supplies it, through a first valve unit 15 and a second valve 16, to the two thrust chambers of the jacks 10.

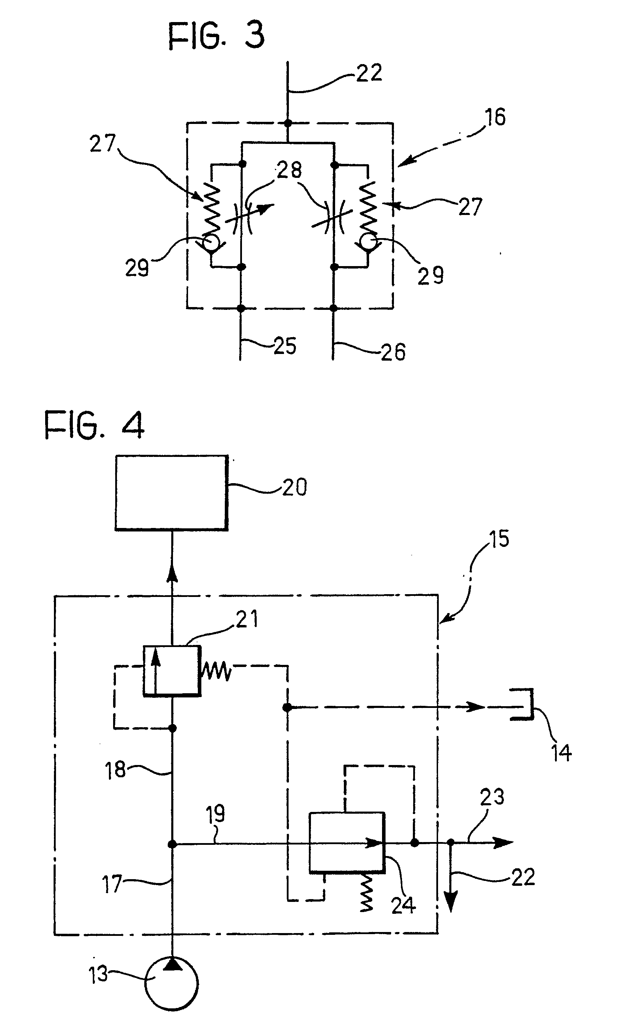

With reference in greater detail to Figure 4, the valve unit 15 includes an inlet duct 17 supplied by the pump 13 and connected to a main outlet duct 18 and a bypass outlet duct 19. A pressure-maintaining valve 21 is inserted in the duct 18 which, in the embodiment illustrated, is connected to the hydraulic power lift 20 of the tractor for keeping the presure at the output of the duct 18 at a constant value of, for example, 16 bars.

The bypass duct 19 supplies the valve unit 16 through a line 22 as well as any other utilisers on the tractor through a line 23. A pressure-reducing valve 24 is inserted in the bypass duct 19 for limiting the pressure delivered to the lines 22 and 23 to a predetermined value, for example of the order of 19 bars.

With reference now in greater detail to Figure 3, the other valve unit 16 has an inlet connected to the line 22 and two separate output lines 25 and 26 connected to the thrust chambers 11 of the hydraulic jacks 10 of the track 1 and the track 2 respectively.

The connection between each line 25, 26 and the thrust chamber 11 of the respective hydraulic jack is made through a quick-release connector, 11a, which can also be used, in the event of failure of circuit 12, for connection of a conventional manually-operated pump for grease injection.

Two one-way-flow valves 27 are connected between the outlets 25 and 26 and the inlet 22 and each includes a flow regulating-metering device 28 and a one-way safety valve 29 connected in parallel with its flow regulator 28.

The two flow regulating-metering devices 28 can be operated manually, independently of each other, by means of two control knobs 30 situated in the driver's site of the tractor.

The flow regulating-metering devices 28 enable the flow cross-section of the hydraulic fluid to be adjusted between a value of zero (the two adjustment knobs 30 completely closed), which corresponds to the closure of communication between the thrust chambers 11 of the hydraulic jacks 10 and the circuit 12, and a predetermined maximum value (for example of the order of 5 mm$^2$) which corresponds to the completely open position of the two control knobs 30.

The two safety valves 29 are calibrated to predetermined maximum pressure of the order of 120 bars.

In operation, the hydraulic fluid taken from the reservoir 14 is supplied by the pump 13 to the valve unit 15 which, as stated, keeps the supply pressure to the valve unit 16 constant. The valve unit 16 is controlled directly by the operator who can operate in the following modes by use of the two knobs 30:

a) with the circuit constantly open for operations under uniform traction (for example ploughing): the thrust chambers 11 of the two hydraulic jacks 10 are supplied automatically at a constant levelled pressure so as to achieve an optimum degree of tensioning of the tracks 1 and 2. The flows into and out from the thrust chambers 11 can be metered to provide for greater or lesser sensitivity by means of the two knobs 30 to enable the tensioning to be adapted correctly to the varying nature of the ground to be worked.

b) with the circuit normally closed for various frequent and long operations in reverse gear: the circuit is opened periodically by the operator, at will, with the use of the knobs 30 solely to return the tracks 1, 2 to the optimum tensioning load either by increasing the load (in the case of slack chains) or decreasing it (in the case of over-tensioned chains).

In this case, the flow can again be metered progressively by means of the knobs 30 and can be interrupted by the operator at the tension considered most suitable.

In the closed condition, the configuration of the hydraulic jacks 10 is kept constant, and thus the position of the respective track-tensioning wheels is maintained fixed. The two safety valves 29 of the valve unit 16 enable the hydraulic fluid to return from the thrust chambers 11 to the discharge 14 in the event of accidental knocks to the tracks 1, 2 which exceed the maximum permitted loads.

The hydraulic fluid can be discharged partially or completely from the chambers 11 to allow any adjustments to lower tensions to be made or to allow the removal of the tracks 1, 2, by the positioning of both of the knobs 30 in their completely open positions with the vehicle engine switched off.

In any case, the valve unit 16 enables the two tracks 1, 2 to be acted upon independently and enables one or other or both of the chambers 11 to be isolated in the event of accidental breakage of the pipes of the hydraulic circuit 12. In this case tensioning can be accomplished using a conventional manually-operated pump for injecting grease into one and/or the other connector 11a.

Naturally the details of construction and forms of embodiment may be varied widely with respect to those described and illustrated, without thereby departing from the scope of the present invention.

## Claims

1. A system for tensioning the tracks of tracked agricultural tractors, in which each track (1, 2) comprises an endless chain belt (3) which passes around a drive wheel and around a track-tensioning wheel (4) which is movable longitudinally and is acted upon by thrust means which bias it away from the drive wheel, and wherein the said thrust means comprise, for each track (1, 2) a single-acting hydraulic jack (10) whose thrust chamber (11) is connected into a hydraulic control circuit (12) which includes a source of pressurised hydraulic fluid (13) and a regulator valve unit (16) for controlling the communication between the source (13) and the thrust chambers (11) of the two hydraulic jacks (10), characterised in that the said valve unit (16) can be set selectively by manually operated means (30) either in a normally open position for the automatic levelling of the pressure in the thrust chambers (11) in dependence on the operating conditions of the tracks, or in a normally closed position for maintaining constant the configuration of the hydraulic jacks (10) and, thus, the position of the respective track-tensioning wheels (4).

2. A tensioning system according to Claim 1, characterised in that the valve unit further includes safety valve means (29) for automatically and independently limiting the pressure in the thrust chambers (11) of the hydraulic jacks (10) in the event of accidental knocks to the respective tracks (1, 2).

3. A tensioning system according to any one of Claims 1 or 2, characterised in that pressure-reducing valve means (24) and pressure-maintaining valve means (21) are interposed between the valve unit (16) and the pressurised-fluid source (13).

4. A tensioning system according to any one of the preceding claims, characterised in that the track-tensioning wheel (4) of each track (1, 2) is supported for rotation by a fork member (6) carried by a rod (7) fixed to the piston (8) of the respective hydraulic jack (10).

5. A tensioning system according to Claim 4, characterised in that at least one helicoidal reaction preloaded spring (7a) is coaxially associated to the rod (7) of each hydraulic jack (10).

6. A tensioning system according to any one of the preceding claims, characterised in that the hydraulic control circuit (12) is connected to the thrust chamber (11) of each hydraulic jack (10) by means of a respective connector (11a) adapted to be used, in the event of failure of said control circuit (12), for connecting a conventional manually operated pump for the injection of grease.

FIG. 1

FIG. 2

# FIG. 3

# FIG. 4

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 277 774   (VICKERS PLC)<br>* column 2, lines 53 - 62; figures 1, 2 * | 1 | B 62 D 55/30 |
| A,D | DE-A-3 237 336   (FRIEDR. KRUPP GMBH)<br>* page 6, line 17 - page 7, line 29 ** page 8, line 29 - page 10, line 2; figure 1 * | 1 | |
| A,D | EP-A-0 332 869   (CADILLAC GAGE TEXTRON INC.)<br>* page 4, lines 54 - 58; figure 4 * | 1 | |
| A,D | FR-A-2 145 778   (MESSIER)<br>* page 2, line 16 - page 3, line 19; figure 3 * | 1 | |
| A | US-A-3 101 977   (J. H. HYLER AND E. W. MEANS)<br>* column 2, lines 53 - 63 ** column 3, line 18 - column 4, line 7; figure 1 * | 1 | |
| A | FR-A-2 340 237   (CATERPILLAR TRACTOR CO.)<br>* page 2, lines 14 - 32; figure 1 * | 5 | |

TECHNICAL FIELDS
SEARCHED (Int. Cl.5)

B 62 D

The present search report has been drawn up for all claims

| Place of search | Date of completion of search | Examiner |
|---|---|---|
| The Hague | 11 June 91 | CHLOSTA P. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document